# EUROPÄISCHE PATENTANMELDUNG

(11) **EP 3 734 902 A1**
(43) Veröffentlichungstag der Anmeldung: **04.11.2020**
(21) Anmeldenummer: 19171566.3
(22) Anmeldetag: 29.04.2019
(51) Int. Cl.: H04L 9/32, H04L 29/08, H04L 29/06

(54) **VERFAHREN UND SYSTEM ZUR VERGABE VON ÖFFENTLICH GETRUSTETEN ZERTIFIKATEN, ENGINEERING- ODER LEITSYSTEM UND TECHNISCHE ANLAGE**

(71) Anmelder: Siemens Aktiengesellschaft, 80333 München (DE)
(72) Erfinder: Eckl, Roland, 91301 Forchheim (DE); Herberth, Harald, 90522 Oberasbach (DE)

(57) **Zusammenfassung**

Die Erfindung betrifft ein Verfahren zur Vergabe von öffentlich getrusteten Zertifikaten (C) für Anlagenkomponenten (G) einer technischen Anlage, bei dem
a) ein Zertifizierungsmodul (ZM) von wenigstens einer Anlagenkomponente (G), die ein öffentlich getrustetes Zertifikat (C) erhalten soll, wenigstens eine Komponentenkennung (K) abfragt
b) das Zertifizierungsmodul (ZM) die wenigstens eine Komponentenkennung (K) zusammen mit einem Zertifikatsantrag (CSR) für ein öffentlich getrustetes Zertifikat (C) an eine Registrierungsstelle (RA) übermittelt,
c) die Registrierungsstelle (RA) anhand der wenigstens einen Komponentenkennung (K) überprüft, ob die wenigstens eine zu der Komponentenkennung (K) gehörige Komponente (G) wenigstens einer berechtigten Person oder wenigstens einem berechtigten Unternehmen zugeordnet ist,
d) die Registrierungsstelle (RA) für den Fall, dass dem so ist, ein öffentlich getrustetes Zertifikat (C) für die wenigstens eine Komponente (G) anfordert,
e) das angeforderte öffentlich getrustete Zertifikat (C) erstellt und an das Zertifizierungsmodul (ZM) übermittelt wird.

Darüber hinaus betrifft die Erfindung ein System (S) zur Vergabe von öffentlich getrusteten Zertifikaten (C) für Anlagenkomponenten (G) einer technischen Anlage, ein Engineering-(ES) oder Leitsystem für eine technisch Anlage und eine technische Anlage.

## Beschreibung

Die Erfindung betrifft ein Verfahren zur Vergabe von öffentlich getrusteten Zertifikaten für Anlagenkomponenten einer technischen Anlage. Darüber hinaus betrifft die Erfindung ein System zur Vergabe von öffentlich getrusteten Zertifikaten für Anlagenkomponenten einer technischen Anlage, ein Engineering- oder Leitsystem für eine technisch Anlage und eine technische Anlage.

Im Kontext technischer Anlagen kommen digitale Zertifikate zum Einsatz. Insbesondere für den Fall, dass es sich um Zertifikate handelt, die zur Laufzeit verwendet werden, spricht man auch von operativen Zertifikaten. Über Zertifikate kann eine sichere, nicht-kompromittierte und vertrauenswürdige Kommunikation zwischen unterschiedlichen Anlagenkomponenten, etwa Geräten und/oder Applikationen, ermöglicht werden. Durch die Verwendung von Zertifikaten kann beispielsweise eine Authentifikation und eine Kommunikationsintegrität von Kommunikationsteilnehmern durch kryptographische Mittel erreicht werden.

Im Rahmen einer Public Key Infrastruktur einer technischen Anlage werden sogenannte Registrierungsstellen (englisch: registration authorities oder kurz: RA) verwendet, um Zertifikatsanträge (sogenannte certificate signing requests oder kurz: CSR) entgegenzunehmen und sie - im Falle der Genehmigung/Validierung - an eine Zertifizierungsstelle (englisch: certificate authority oder kurz: CA) weiterzuleiten. Dabei ist die RA die Instanz, die entscheidet, welche Zertifikatsanfragen genehmigt/validiert werden und die CA die Instanz, welche die Zertifikate erstellt.

Anlagenkomponenten können die Zertifikate, die sie beispielsweise für die Nutzung verschiedener sicherer Protokolle wie z.B. TLS oder OPC UA benötigen, selbst beantragen. Eine Anlagenkomponente in der Rolle eines Clients bzw. eines Antragstellers richtet ihren Zertifikatsantrag an die Registrierungsstelle (RA), welche den Antrag im Falle der Genehmigung/Validierung an die Zertifizierungsstelle (CA), die sich beispielsweise in der Anlage ("Onsite-CA") oder einem Trust Center ("Offsite-CA" oder "CA as a Service") befindet, weiterleitet.

Gesicherte Verbindungen bei Webseiten (z.B. HTTPS oder Secure Web Sockets) sind aus Anforderungssicht oftmals unabdingbar. Hierfür werden Zertifikate benötigt.

Gerade im industriellen Umfeld liegen oftmals abgetrennte, private Netzwerke vor und ist es vielfach so, dass Geräte (bzw. darauf befindliche Webserver) nicht vom öffentlichen Internet aus erreichbar sind.

Dennoch liegt gerade im Web-Umfeld ein sehr heterogenes Umfeld vor, bei dem nicht alle Teilnehmer (insbesondere Clients) vollständig oder mit wenig Aufwand kontrolliert bzw. in eine verwaltete Infrastruktur aufgenommen werden können. Insbesondere mobile Endgeräte beispielsweise sind häufig nicht Teil der Infrastruktur (Stichwort BYOD, "*Bring your own device*").

Nach Auffassung der Anmelderin ist es erstrebenswert, dass sich sämtliche Geräte (Clients wie Server) in die öffentliche Infrastruktur integrieren lassen. Zertifikate sollten nicht ausschließlich von kontrollierten Endgeräten akzeptiert werden, bei denen diese als vertrauenswürdig hinterlegt wurden, sondern sollten auch von beliebigen anderen Endgeräten, etwa mobilen Endgeräten, jederzeit verifiziert werden können. Dadurch würde es beispielsweise möglich, dass sich ein Betreiber/Benutzer Daten etwa einer Steuerung einer technischen Anlage auf einem mobilen Endgerät (BYOD) anzeigen lässt.

Im Fall von Browsern auf Client-Endgeräten müssen dafür Zertifikate in der gesamten Zertifikatskette bis hin zu allgemein anerkannten Trusted Root Certificates (TRC) verifizierbar sein (siehe beispielsweise die "Root CA Policy" von Google Chrome). Bei diesen handelt es sich um eine Handvoll von Zertifikaten, die browser- und betriebssystemübergreifend als vertrauenswürdig eingestuft werden und nicht individuell installiert werden müssen.

Ist eine Überprüfbarkeit bis hin zu einem solchen TRC nicht gegeben, können Funktionen aufgrund der mangelnden Überprüfbarkeit eingeschränkt bis hin zu nicht gegeben sein. Dies bedeutet, der Anwender bekommt im besten Fall eine Fehlermeldung, welche zumindest umgangen werden kann (wobei ein Bestätigen, dass man trotz fehlgeschlagener Überprüfung fortfahren möchte ein eklatantes Sicherheitsrisiko darstellt und nicht zu empfehlen ist), oder aber die Funktion wird stillschweigend einfach unterdrückt (etwa AJAX-Calls aus der Seite heraus werden vom Browser abgelehnt oder eingebettete iframes werden nicht dargestellt).

Der Aufwand für die Beschaffung öffentlich getrusteter Zertifikate für geschlossene Anlagen ist nach Kenntnisstand der Anmelderin derzeit immens bzw. dies ist gar nicht möglich.

Zertifikate sind an Trust (Vertrauen) gebunden. Der Aussteller muss also verifizieren und nachfolgend attestieren können, dass ein Antragsteller die Kontrolle über eine Domäne besitzt.

Eine Möglichkeit, ein öffentlich getrustetes Zertifikat zu erhalten, besteht nach Kenntnis der Anmelderin darin, sich ein solches manuell zu beschaffen. Dazu muss sich der Antragsteller eines Zertifikats ausweisen und diverse Dokumente vorlegen, die ihn eindeutig identifizieren und sicherstellen, dass er berechtigt/legitimiert ist, für die gewünschte Domäne Zertifikate zu erhalten. Danach bekommt er ein Zertifikat übermittelt und kann dieses zusammen mit seinem Schlüsselmaterial - meist ebenfalls händisch - in seiner Domäne installieren.

Eine weitere Möglichkeit besteht in der Verwendung von LetsEncrypt (siehe beispielsweise https://letsencrypt.org/). Hier wird Vertrauen erzeugt, indem der Eigentümer eines Servers darlegen muss, dass er die Kontrolle über den Server und die damit verbundene Domäne hat. Hier setzt die Zertifizierungsstelle (CA) jedoch eine direkte Erreichbarkeit des Webservers voraus, wodurch dieser Ansatz für geschlossene Netze und Bereiche nicht anwendbar ist (LetsEncrypt basiert auf dem ACME Protokoll). Für eine Steuerung, etwa SPS einer technischen Anlage mit geschlossenem Netz beispielsweise wäre dies nicht erfüllt.

Zertifizierungsmanagement-Protokolle, etwa das Certificate Management Protocol (CMP, siehe beispielsweise https://de.wikipedia.org/wiki/Certificate_Management_Protocol ) erlauben zwar eine automatisierte Ausführung von Zertifikatsanforderung, -erstellung und -zuweisung. Hierzu ist jedoch eine komplette Infrastruktur erforderlich, die von dem Betreiber einer technischen Anlage erst errichtet werden muss. Selbst wenn dieser Aufwand für ein geschlossenes Netz betrieben würde, könnten auf diesem Wege keine öffentlich getrusteten Zertifikate ausgestellt werden, da eine externe CA nicht attestieren kann, was in einem abgeschlossenen System von ihr selbst gar nicht verifiziert werden kann.

Daher greifen nach Kenntnisstand der Anmelderin in der Realität derzeit viele Anwender nur auf self-signed Zertifikate mit all den vorgenannten Nachteilen zurück, da sie entweder den Aufwand bzw. die Kosten der manuellen Beschaffung von öffentlich getrusteten Zertifikaten scheuen, oder aber weil der Einsatz in einer industriellen Anlage unter Umständen bisher gar nicht anders zu bewerkstelligen ist.

Ausgehend davon ist es eine Aufgabe der vorliegenden Erfindung, eine Möglichkeit zu schaffen, mit vertretbarem Aufwand öffentlich getrustete Zertifikate für Komponenten technischer Anlagen mit abgetrennten, privaten Netzwerken vergeben zu können.

Diese Aufgabe wird gelöst durch ein Verfahren zur Vergabe von öffentlich getrusteten Zertifikaten für Anlagenkomponenten einer technischen Anlage, bei dem
a) ein Zertifizierungsmodul von wenigstens einer Komponente einer technischen Anlage, die ein öffentlich getrustetes Zertifikat erhalten soll, wenigstens eine bevorzugt eindeutige Komponentenkennung abfragt und/oder für wenigstens eine Komponente einer technischen Anlage, die ein öffentlich getrustetes Zertifikat erhalten soll, wenigstens eine bevorzugt eindeutige Komponentenkennung generiert,
b) das Zertifizierungsmodul die wenigstens eine abgebfragte und/oder wenigstens eine generierte Komponentenkennung zusammen mit einem Zertifikatsantrag für ein öffentlich getrustetes Zertifikat für die wenigstens Komponente an eine Registrierungsstelle (RA) übermittelt,
c) die Registrierungsstelle (RA) anhand der wenigstens einen Komponentenkennung überprüft, ob die wenigstens eine zu der Komponentenkennung gehörige Komponente wenigstens einer berechtigten Person oder wenigstens einem berechtigten Unternehmen, in deren oder dessen Verantwortung die wenigstens eine Komponente steht, zugeordnet ist,
d) die Registrierungsstelle (RA) für den Fall, dass dem so ist, ein öffentlich getrustetes Zertifikat für die wenigstens eine Komponente anfordert, und
e) das angeforderte öffentlich getrustete Zertifikat erstellt und an das Zertifizierungsmodul übermittelt und bevorzugt in einem geschützten Bereich insbesondere des Zertifizierungsmodul gespeichert wird.

Die Erfindung sieht mit anderen Worten vor, ein Zertifizierungsmodul bereitzustellen, mit dem Komponenten, die ein öffentlich getrustetes Zertifikat erhalten sollen, eindeutig identifiziert werden können, bzw. mit dem insbesondere für den Fall, dass Komponenten noch nicht in Betrieb genommen wurden und daher (noch) keine Kennung von diesen abgerufen werden kann, wenigstens eine bevorzugt eindeutige und/oder vorübergehende Kennung für die zu zertifizierenden Komponenten generiert werden kann.

Anstelle der Komponenten kontaktiert dann das Zertifizierungsmodul einen zentralen Dienst und übermittelt diesem den (jeweiligen) Zertifikatsantrag für ein öffentlich getrustetes Zertifikat für die bevorzugterweise eindeutig identifizierte(n) bzw. aufgrund der generierten Kennung(en) eindeutig identifizierbare(n) Komponente zusammen mit der (den) Kennung(en).

Unter Verwendung der zur Verfügung gestellten abgefragten bzw. generierten bevorzugt eindeutigen Kennung(en) kann die Registrierungsstelle dann prüfen, ob die (jeweilige) identifizierte/identifizierbare Komponente einer Person bzw. einem Unternehmen zugeordnet werden kann, in deren/dessen Verantwortung die Komponente steht, insbesondere deren/dessen Eigentum die Komponente ist. Bei der Person bzw. dem Unternehmen handelt es sich bevorzugt um einen Kunden, welcher die Komponente erworben hat. Dass eine Komponente in der Verantwortung der Person bzw. des Unternehmens steht, bedeutet insbesondere, dass die Person bzw. das Unternehmen die Kontrolle über die Komponente hat, was bevorzugt vertraglich zugesichert ist, und/oder dass vertraglich geregelt ist, welche Konsequenzen es hat, wenn ein etwaiger Missbrauch des beantragten Zertifikates stattfände.

Bei der wenigstens einen Komponentenkennung kann es sich beispielswese um eine Seriennummer und/oder ein Maschinen-/Gerätezertifikat und/oder einen Fingerprint und/oder eine Typenbezeichnung handeln. Entsprechend wird in Weiterbildung in Schritt a) eine Seriennummer und/oder ein Geräte- bzw. Maschinenzertifikat und/oder ein Fingerprint und/oder eine Typenbezeichnung als Komponentenkennung abgefragt und/oder generiert.

Es kann sein, dass eine Person bzw. ein Unternehmen (manuell) vertraglich zusichert, dass die Anforderung der Kontrolle über die Komponente erfüllt ist. Das Bestehen einer solchen vertraglichen Zusicherung kann dann von der Registrierungsstelle im Rahmen der Überprüfung erfasst bzw. erkannt bzw. abgefragt werden.

Auch ist es möglich, dass auf eine Datenbank, etwa eine Kundendatenbank zugegriffen wird, um zu prüfen, ob eine Zuordnung einer zu zertifizierenden Komponente zu einer/einem die Verantwortung tragendenden Person/Unternehmen gegeben ist.

Entsprechend kann in Weiterbildung vorgesehen sein, dass die Überprüfung in Schritt c) einschließt, dass die Registrierungsstelle in einer Datenbank, in der Komponentenkennungen zusammen mit zugehörigen berechtigten Personen und/oder Unternehmen, die bevorzugt Eigentümer zugehöriger Komponenten darstellen, gespeichert sind, nach wenigstens einem Eintrag für die zusammen mit dem Zertifikatsantrag übermittelte Komponentenkennung sucht. Unter zugehörigen Komponenten sind dabei zu den hinterlegten Komponentenkennungen gehörige Komponenten zu verstehen. Bevorzugt gilt, dass Komponenten, für die eine Kennung in der Datenbank hinterlegt ist, in der Verantwortung der berechtigten Person/des berechtigten Unternehmens stehen, was besonders bevorzugt vertraglich zugesichert ist.

Sofern ein solcher Eintrag in der Datenbank gefunden wird, wird die Zertifikatsanfrage (der Zertifikatsantrag) für die betreffende Komponente bevorzugt genehmigt/validiert. Wird kein solcher Eintrag gefunden, wird sie hingegen zweckmäßiger Weise abgelehnt und ein beantragtes Zertifikat daher nicht erstellt.

Die Datenbank kann beispielsweise durch eine sogenannte "Industrial Mall" von Siemens gegeben sein.

Kommt eine Datenbank zum Einsatz, ist es möglich, dass diese sowohl eigene Kundendaten als auch Daten von Drittanbietern, etwa OEMs umfasst.

In Schritt e) kann dem Zertifizierungsmodul zusammen mit dem öffentlich getrusteten Zertifikat Schlüsselmaterial übermittelt werden. Das Zertifizierungsmodul kann bevorzugterweise Zertifikate auf einem vor Mitlesen und Änderung geschützten Weg in einen geschützten Speicher der Anlagen-/Industriekomponente übertragen. Die Anlagen-/Industriekomponente selbst kann dann bevorzugt mittels des Zertifikats einen Webserver oder andere Aspekte absichern.

Im Gegensatz beispielsweise zu einem manuellen Zertifikatserwerb sind durch die erfindungsgemäße Vorgehensweise folgende Aspekte erfüllt:
- Eine Person/Unternehmen bestätigt rechtlich verbindlich der Eigentümer der Komponente zu sein, beispielsweise, indem sie/es einwilligt, dass dies auf alle gekauften und insbesondere in einer Datenbank hinterlegten Komponenten zutrifft, bzw. es ist (gesichert) bekannt, wer der Eigentümer/Verantwortliche ist (eine rechtliche Zusicherung kann auch im Rahmen des Zertifikatserwerbs, beispielsweise in einem Engineering System erfolgen).
- Die (jeweilige) Komponente, für welche ein beantragtes Zertifikat gelten soll, ist durch das Zertifizierungsmodul eindeutig identifizierbar.
- Durch das Zertifizierungsmodul wird weiterhin sichergestellt, dass das Zertifikat und etwaiges Schlüsselmaterial niemals direkt für die Person/das Unternehmen, insbesondere den Kunden zugreifbar wird, sondern auf sichere Weise ausschließlich in die vorbestimmte und zugeordnete Zielkomponente installiert werden kann.

Damit ist sichergestellt, dass ein Zertifikat ausschließlich auf einer Komponente installiert werden kann, für die es einen rechtlich zuständigen Besitzer gibt. Dies ohne, dass es erforderlich ist, dass die Registrierungsstelle und/oder die Zertifizierungsstelle Zugriff auf die Komponente bzw. einen Webserver einer solchen haben muss.

Es sei angemerkt, dass sich das erfindungsgemäße Verfahren sowohl für die initiale (erstmalige) Vergabe eines öffentlich getrusteten Zertifikates als auch die Zertifikatserneuerung (erneute Vergabe) eignet. Das erfindungsgemäße Verfahren zur Vergabe von Zertifikaten ist somit ein Verfahren zur initialen Vergabe und/oder Erneuerung von öffentlich getrusteten Zertifikaten.

Bei Zertifikatsanträgen kann es sich entsprechend sowohl um Anträge zwecks der initialen Beantragung (Bootstrapping) als auch der Erneuerung (Update) von Zertifikaten handeln.

Das Zertifizierungsmodul befindet sich bevorzugt vor Ort bei der technischen Anlage, insbesondere im gleichen Netzwerk wie die technische Anlage. Es ist insbesondere auf Hardware implementiert, die einen Bestandteil der technischen Anlage und/oder des Netzwerks einer solchen bildet.

Das Zertifizierungsmodul ist in ganz besonders bevorzugter Ausgestaltung Bestandteil eines Engineering Systems der technischen Anlage oder mit einem Engineering System der technischen Anlage funktional verbunden.

Industrial Engineering Systeme, auch bekannt als Project Engineering Tools für industrielle Anwendungen, können für das Lösungs-Design und die Implementierung sowie für spätere Betriebs- und/oder Managementprozesse eingesetzt werden. Lösungen sind hier als industrielle Lösungen insbesondere für die Prozess- und/oder diskrete Industrie zu verstehen.

Das Engineering eines Automatisierungsprojekts (z.B. für eine Anlage) umfasst in der Regel einen oder mehrere der folgenden Schritte: Bestimmen der erforderlichen Funktionalität im Projekt, Bestimmen, welche Komponenten benötigt werden, um diese Funktionalität anzubieten, Zuordnen von Funktionalität und einer tatsächlichen physikalischen Position zu den Komponenten in der Anlage, Zuweisen von Kommunikationsstrukturen zu den Komponenten (z.B. welche Komponenten mit welchen anderen Komponenten kommunizieren dürfen und wie sie kommunizieren, was der eigentliche Zweck der Komponente ist), etc.

Ein Automatisierungsprojekt korreliert mit einem realen Projekt, z.B. dem Aufbau einer neuen Produktions-/Fertigungslinie in einer neuen oder bestehenden Industrieanlage oder einer neuen oder bestehenden Prozessanlage. Einige von vielen Beispielen, in denen solche Automatisierungsprojekte realisiert werden, sind die Herstellung von Fahrzeugen in der Automobilindustrie, die Herstellung von Elektronik, die Herstellung von Lebensmittel- und Getränkeprodukten und vieles mehr.

In diesen Anwendungen wird das Engineering System in der Regel verwendet, um eine oder mehrere Konfigurationen von Anlagen-/Automatisierungskomponenten im Rahmen eines Projekts zur industriellen Automatisierung zu erzeugen. Die Industrie- Automatisierungsprojekte können beispielsweise Fabrikautomationsprojekte, Projekte zur Automatisierung der Prozessindustrie und alle weitere Automatisierungsprojekte im industriellen Kontext sein.

Eine Anlagen- bzw. Automatisierungskomponente kann eine Hardwarekomponente und/oder eine Softwarekomponente oder eine Kombination aus beidem insbesondere für den Einsatz im oben genannten Automatisierungsprojekt sein. Anlagen- bzw. Automatisierungskomponenten umfassen unter anderem: speicherprogrammierbare Steuerungen (SPS), E/A-Module, industrielle Kommunikationsgeräte, industrielle Netzwerkkomponenten, Sensoren, Aktoren, Antriebe und andere industrielle Geräte, die häufig in der Prozess- oder Automatisierungsindustrie verwendet werden. Softwarekomponenten, die Hardware mit anderen Komponenten teilen, sind ebenfalls über ein Engineering System konfigurierbar.

Ein Engineering System (teilweise auch als Engineering Tool bezeichnet) hat eine sehr genaue Kenntnis über die Automatisierungs-Produkte in der Anlage. So kennt es die exakte Hardware (z.B. anhand der Seriennummer) oder das konkrete Produkt (z.B. anhand der MLFB, also der maschinenlesbaren Fabrikatebezeichnung), ist aber auch in der Lage, eine Komponente, etwa ein Gerät eindeutig zu identifizieren oder identifizierbar zu machen (z.B. über ein fest eingebranntes oder sicher aufgespieltes Maschinen- oder Geräte-Zertifikat). Ebenso besitzt ein Engineering System in der Regel bereits Möglichkeiten, Daten sicher auf die entsprechenden Automatisierungs-Geräte zu übertragen (im Sinne von fälschungssicher sowie nicht durch Dritte einseh- bzw. mitlesbar).

Es sei angemerkt, dass auch wenn es sehr vorteilhaft ist, wenn das Zertifizierungsmodul in ein Engineering System der Anlage integriert ist, auch nicht ausgeschlossen ist, dass dieses ein Stand-Alone-Tool bzw. Stand-Alone-Modul darstellt bzw. Teil eines anderen Tools bildet. Dann bestehet bevorzugt eine funktional Verbindung mi dem Engineering System. Dadurch kann das Tool auch das Netzwerk wechseln, etwa wenn die Anlagen-/Industriekomponente in einem Netzwerk agiert, welches nicht nur von außen erreichbar ist, sondern auch selbst nicht mit weiteren Netzwerken nach außen Kontakt aufnehmen kann. Man spricht in diesem Fall von vollständig abgeschlossenen Netzwerken.

Die Erfindung bietet mehrere Vorteile. Für Anlagen kann ein in das Engineering integrierter und insbesondere an Kunden-Vertragsbeziehung gebundener Zertifikats-Erstellungs- und -Deployment-Prozess erhalten werden.

Insbesondere die Integration in das Engineering bietet eine erweiterte, einfachere und sicherere Handhabung, beispielsweise eine deutlich kleinere Hürde als bei Integration eines standardisierten Protokolls in jede Anlagenkomponente/jedes Produkt. Das Engineering System kennt gerätespezifische Zugangs- und Verteilungswege von Natur aus.

Es wird eine Unterstützung des Offline-Engineerings möglich, was Systeme wie beispielsweise LetsEncrypt nicht beherrschen, aber für das Engineering einer technischen Anlage elementar ist.

Es wird eine CSR-Erzeugung und/oder -Übermittlung durch das bevorzugt in das Engineering System integrierte Zertifizierungsmodul, ggf. auch bevor das tatsächliche Gerät vorhanden ist und installiert wird, möglich.

Es kann ein Deployment eines Zertifikats und ggf. etwaigen Schlüsselmaterials im Zuge des Downloads bzw. der Inbetriebnahme, wiederum bevorzugt unterstützt durch das Engineering erfolgen.

Es werden auch indirekte Offline-Szenarios möglich (z.B. auf spezielle SD-Karten für SIMATIC PLCs oder HW Dongle SiPlug)

Es kann eine technische Vertrauensstellung zwischen einer Zertifizierungsstelle (CA) und Anlagenkomponenten, etwa Endgeräten erhalten werden, da aufgrund der einen Komponentenkennung (also eines oder mehrerer eindeutiger Merkmale) ein Kunde und dessen tatsächlich erworbenen Geräte identifiziert werden können.

Die erforderlichen Schritte können dabei automatisch ablaufen, ohne dass ein Benutzer bzw. Kunde manuell eingreifen muss.

Es wird keine Infrastruktur für das Zertifikats-Management in den Komponenten, insbesondere beim Kunden vorausgesetzt, stattdessen bezieht das Zertifizierungsmodul, welches bevorzugt Bestandteil eines Engineering Systems der Anlage oder mit einem solchen funktional verbunden ist, die Zertifikate von einer bevorzugte externen CA.

Die Zertifikatsbeschaffung kann als Service (Certificate as a Service, CaaS) erbracht werden, beispielsweise für Kunden, welche zu zertifizierende Anlagenkomponente erworben haben.

Die Zertifizierungsmodul kann eine funktionale Einheit darstellen, die beispielsweise durch eine Software-Komponente auf geeigneter Hardware implementiert sein kann. Es kann sein, dass das Zertifizierungsmodul durch Software implementiert ist, die sich auf Hardware eines/des Engineering Systems der technischen Anlage befindet. Selbstverständlich ist es auch möglich, dass das Zertifizierungsmodul separate "eigene" Hardware umfasst. Dann ist das Zertifizierungsmodul bzw. dessen Hardware in bevorzugter Ausgestaltung mit einem/dem Engineering System der technischen Anlage funktional verbunden.

Unter einer Registrierungsstelle einer technischen Anlage wird eine funktionelle Instanz verstanden, die Registrierungsanfragen wie Zertifikatsanträge von Komponenten der technischen Anlage entgegennimmt, diese prüft und im Erfolgsfall insbesondere an eine Zertifizierungsstelle der technischen Anlage weiterleitet. Im vorliegenden Fall ist die Registrierungsstelle vor allem dafür vorgesehen, Zertifikatsanträge von Anlagenkomponenten der technischen Anlage zu behandeln. Die Registrierungsstelle kann eine lokale Registrierungsstelle sein, die mit einer übergeordneten globalen Registrierungsstelle kommunizieren kann, welche beispielsweise wiederum direkt in Verbindung mit einer Zertifizierungsstelle der technischen Anlage stehen kann. Die Registrierungsstelle kann einen Registrierungsservice umfassen oder durch einen solchen gegeben sein. Die Registrierungsstelle, welcher das Zertifizierungsmodul erfindungsgemäß die wenigstens eine Komponentenkennung zusammen mit dem Zertifikatsantrag übermittelt, ist ausgebildet und/oder eingerichtet, anhand der wenigstens einen Komponentenkennung, mit anderen Worten anhand eines oder mehrere eindeutiger Merkmale zu ermitteln/überprüfen/validieren, ob die (jeweilige) Komponente einer Person/einem Unternehmen zugeordnet ist und in deren/dessen Verantwortung steht, insbesondere, ob eine rechtlich bindende Kundenbeziehung für die (jeweilige) Komponente besteht.

Es kann auch sein, dass von der Registrierungsstelle ermittelt/überprüft/validiert wird, für welche Anwendung auf der wenigstens einen Komponente das beantragte öffentlich getrustete Zertifikat vorgesehen ist. Dann ist die Registrierungsstelle entsprechend ausgebildet und/oder eingerichtet.

Bei der technischen Anlage handelt es sich insbesondere um eine Fertigungs- oder Prozessanlage. Es kann sich etwa um eine Anlage aus der Prozessindustrie, wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Diese Anlagen verfügen in der Regel jeweils über ein Leitsystem oder zumindest ein computerunterstütztes Modul zur Steuerung und Regelung des ablaufenden Prozesses oder der Produktion.

Mit dem Begriff "Public-Key Infrastruktur" (kurz: PKI) wird eine Sicherheitsinfrastruktur für eine technische Anlage verbunden, die Services für einen sicheren Austausch von Daten zwischen Kommunikationspartnern der technischen Anlage bereitstellt. Mit Hilfe der Public-Key Infrastruktur lassen sich Zertifikate ausstellen, verteilen und prüfen.

Unter einem Zertifikat wird ein digitaler Datensatz verstanden, der bestimmte Eigenschaften (in diesem Fall von Maschinen, Geräten, Applikationen und dergleichen) bestätigt. Eine Authentizität und Integrität des Zertifikats können mittels kryptografischer Verfahren verifiziert werden. Unter öffentlich getrusteten Zertifikaten sind insbesondere solche zu verstehen, die in der gesamten Zertifikatskette bis hin zu allgemein anerkannten Trusted Root Certificates (TRC) verifizierbar sind. Man kann öffentlich getrustete Zertifikate auch als öffentlich anerkannte Zertifikate bezeichnen. Öffentlich getrustete/anerkannte Zertifikate sind insbesondere solche, die von Mitgliedern des CA/Browser Forums herausgegeben werden (siehe https://cabforum.org/). Besonders bevorzugt handelt es sich bei öffentlich getrusteten/anerkannten Zertifikaten, die im Rahmen des erfindungsgemäßen Verfahrens beantragt/vergeben werden, um SSL (Secure Sockets Layer) oder TLS (Transport Layer Security) Zertifikate.

Bei einer Anlagenkomponente kann es sich beispielsweise um eine Steuerungsvorrichtung, etwa SPS (speicherprogrammierbare Steuerung, englisch: Programmable Logic Controller, PLC), ein Gerät, insbesondere Feldgerät, eine Applikation oder dergleichen handeln. Es handelt sich insbesondere um eine Automatisierungskomponente bzw. ein Automatisierungsgerät.

Die wenigstens eine Anlagenkomponente weist bevorzugt wenigstens einen Webserver auf bzw. stellt einen Webserver dar.

Für die Übermittlung des wenigstens einen Zertifikatsantrages von dem Zertifizierungsmodul an die Registrierungsstelle kann ein Zertifikatsmanagementprotokoll zum Einsatz kommen. Es kann sich um ein gängiges, im Kontext eines Zertifikatsmanagements für eine technische Anlage, insbesondere ein Leitsystem einer solchen üblicherweise verwendetes Protokoll, beispielsweise das Certificate Management Protocol (kurz: CMP, siehe beispielsweise RFC 4210/4211 der Internet Engineering Task Force (IETF)) handeln. CMP kann insbesondere über https realisiert sein bzw. werden. Es sei betont, dass ein Standardprotokoll zum Einsatz kommen kann, jedoch nicht muss. Das Zertifizierungsmodul und die RA können auch rein proprietär miteinander kommunizieren.

Im Rahmen des erfindungsgemäßen Verfahrens können mehrere Varianten unterstützt werden, insbesondere:
Online Engineering: Die Komponenten (bzw. Server) sind in der Anlage bereits installiert. Das Zertifizierungsmodul kann hier Merkmale auslesen, eine Komponente eindeutig identifizieren (und sicherstellen, dass es keine weitere Instanz gibt, welche dieselben Merkmale aufweist) und Daten sowie Zertifikate auf die Komponente sicher transferieren.

Offline Engineering: Die Komponenten (Server) sind noch nicht in der Anlage installiert, sondern diese wird ggf. erst noch projektiert. Hierbei muss das Zertifizierungsmodul die für die Zielkomponente notwendige wenigstens eine Komponentenkennung (mit anderen Worten eines oder mehrere eindeutige Merkmale, z.B. ein Maschinenzertifikat) eventuell erst erzeugen. Öffentlich getrustete Zertifikate können nun jedoch bereits vorab angefordert und erzeugt werden und im Zertifizierungsmodul intern für das projektierte Gerät vorgehalten werden. Später bei einer Inbetriebnahme stellt das Zertifizierungsmodul dann bevorzugt sicher, dass die wenigstens eine bevorzugt eindeutige Komponentenkennung (mit anderen Worten eindeutige Merkmale) tatsächlich vorliegt bzw. fälschungssicher eingebracht werden kann und dann bevorzugt eingebracht wird. Wenn dies sichergestellt wurde, kann auch das öffentlich getrustete Zertifikat dorthin transferiert werden.

Eine weitere vorteilhafte Ausführungsform zeichnet sich daher dadurch aus, dass für den Fall, dass von dem Zertifizierungsmodul in Schritt a) keine Komponentenkennung abgefragt wurde (insbesondere, weil die wenigstens eine Komponente noch nicht in Betrieb war - Offline-Szenario), das Zertifizierungsmodul vor der Übermittlung des öffentlich getrusteten Zertifikats an die wenigstens eine Komponente und/oder die mit der wenigstens einen Komponente verbundene oder verbindbare Speichereinrichtung wenigstens eine Komponentenkennung von der wenigstens einen Komponente abfragt und die abgefragte Komponentenkennung bevorzugt an die Registrierungsstelle übermittelt. Die (dann) abgefragte Komponentenkennung kann an die Registrierungsstelle übermittelt werden. Die Registrierungsstelle kann diese in einer Datenbank ablegen.

Alternativ oder zusätzlich kann vorgesehen sein, dass das Zertifizierungsmodul vor der Übermittlung des öffentlich getrusteten Zertifikats an die wenigstens eine Komponente und/oder die mit der wenigstens einen Komponente verbundene oder verbindbare Speichereinrichtung prüft, ob eine von ihm in Schritt b) generierte wenigstens eine Komponentenkennung fälschungssicher in der Komponente gespeichert/abgelegt werden kann.

Indirekter Offline-Fall: Insbesondere in der Automatisierung existiert der Sonderfall, dass teils gar nicht die tatsächliche Komponente, sondern ein Stellvertreter mit der Konfiguration versehen wird. So kann z.B. eine SD-Karte oder ein (USB-)Dongle beim Download die komplette Konfiguration für eine Steuerung (etwa SPS) erhalten, die tatsächliche Komponente im Ersatzteilfall jedoch sofort ausgewechselt werden. Der Download erfolgt dabei also nur indirekt auf die tatsächliche Komponente. In diesem Fall muss jedoch der Stellvertreter, beispielsweise die Karte oder der (USB-)Dongle, eindeutig zu identifizieren sein und muss vor unerlaubtem Zugriff geschützt sein - die Daten im geschützten Bereich dürfen also nicht ohne Weiteres auslesbar sein. Dann kann die betreffende/jeweilige Komponente dem Stellvertreter, etwa der SD-Karte oder dem Dongle, die Konfiguration entnehmen. Das Zertifikat sollte bevorzugt verschlüsselt sein und es sollte bevorzugt nur die betreffende/jeweilige Komponente beim Einlesen der Konfiguration dazu in der Lage sein, das Zertifikat zu entschlüsseln.

Das Zertifizierungsmodul hat zweckmäßiger Weise (zumindest zu irgendeinem Zeitpunkt) Zugriff auf die zu validierende Komponente bzw. eine einen Stellvertreter darstellende Speichereinrichtung, etwa eine SD-Karte oder einen Dongle. Dies gilt insbesondere, wenn das Zertifizierungsmodul Bestandteil eines Engineering Systems oder mit einem solchen funktional verbunden ist.

Insbesondere im Online-Fall kann das öffentlich getrustete Zertifikat (ggf. mit Begleitmaterial) bevorzugt direkt für die Zielkomponente verschlüsselt werden. So ist gewährleistet, dass das Zertifikat durchgängig abgesichert ist und ausschließlich dort entschlüsselt werden kann. Darüber hinaus kann jedes Projekt im Engineering System mit einem kundenspezifischen Schlüssel versehen werden, so dass im Offline-Fall die Zertifizierungsstelle (CA) den Transport zumindest bis zum Zertifizierungsmodul absichern kann. Im jeweiligen Projekt kann wiederum das Material für die konkrete Komponente, etwa das konkrete Endgerät verschlüsselt werden. Somit ist ebenfalls eine durchgängige Absicherung möglich.

Es kann vorgesehen sein, dass für den Fall, dass die Überprüfung in Schritt c) ergibt, dass mehrere zu der wenigstens einen Komponentenkennung gehörige Komponenten wenigstens einer berechtigten Person oder wenigstens einem berechtigten Unternehmen zugeordnet sind, insbesondere Eigentum wenigstens einer berechtigten Person oder wenigstens eines berechtigten Unternehmens darstellen, die insbesondere in einer Datenbank hinterlegte verfügbare Anzahl potentieller Treffer um eins reduziert wird. Beispielsweise kann insbesondere eine Datenbank einen Eintrag umfassen, gemäß dem ein Benutzer/eine Person /ein Unternehmen eine bestimmte Anzahl von Automatisierungskomponenten eines gegebenen Typs besitzt. Nach Genehmigung eines Zertifikatsantrages bzw. nach Ausstellung eines Zertifikats für eine solche Komponente würde die Anzahl um eins reduziert. Wenn das Zertifikat dann aufgespielt wird, wird bevorzugt eine insbesondere eindeutige Komponentenkennung zurückgespielt, also der Datenbank übermittelt und dort gespeichert. Zertifikatsupdates sollten dann möglichst nicht mehr für solche "allgemeinen Treffer" sondern die konkrete Kennung durchgeführt werden.

Eine weitere vorteilhafte Ausführungsform des erfindungsgemäßen Verfahrens zeichnet sich dadurch aus, dass die Registrierungsstelle das öffentlich getrustete Zertifikat in Schritt d) bei einer Zertifizierungsstelle anfordert, insbesondere, indem sie den Zertifikatsantrag validiert und/oder an die Zertifizierungsstelle weiterleitet. Die Zertifizierungsstelle kann dann das angeforderte öffentlich getrustete Zertifikat für die wenigstens eine Komponente erstellen oder beschaffen.

Das Zertifizierungsmodul übermittelt das ihm in Schritt e) übermittelte öffentlich getrustete Zertifikat weiterhin bevorzugt an die wenigstens eine Komponente und/oder an eine mit der wenigstens einen Komponente verbundenen oder verbindbare Speichereinrichtung. Bei einer Speichereinrichtung handelt es sich bevorzugt um einen "Stellvertreter", etwa eine SD-Karte, einen (USB-)Dongle oder ein anderes Speichermedium, auf den eine Konfiguration für die Komponente aufgespielt werden kann/wird.

Zusammen mit dem öffentlich getrusteten Zertifikat kann Schlüsselmaterial übermittelt werden. Bei dem Schlüsselmaterial handelt es sich insbesondere um solches, welches dem Zertifizierungsmodul zusammen mit dem Zertifikat übermittelt wurde, insbesondere von einer Zertifizierungsstelle.

Das öffentlich getrustete Zertifikat wird bevorzugt in einem fälschungssicheren Zertifikatsspeicher der wenigstens einen Komponente und/oder der mit der wenigstens einen Komponente verbundenen oder verbindbaren Speichereinrichtung abgelegt. Für die Übermittlung des öffentlich getrusteten Zertifikats von dem Zertifizierungsmodul an die wenigstens eine Komponente und/oder an die mit der wenigstens einen Komponente verbundene oder verbindbare Speichereinrichtung kann eine direkte Verbindung zwischen dem Zertifizierungsmodul bzw. zwischen Hardware, auf welcher das Zertifizierungsmodul implementiert ist, und der wenigstens einen Komponente und/oder der mit der wenigstens einen Komponente verbundenen oder verbindbaren Speichereinrichtung bestehen bzw. hergestellt werden. Unter "direkt" ist dabei insbesondere zu verstehen, dass das Zertifizierungsmodul mit der Komponente "direkt" kommunizieren kann. Es bedeutet bevorzugt, dass sich das Zertifizierungsmodul im selben Netzwerk befindet, von dem aus die Komponente erreichbar ist und kein Vermittler notwendig ist. Eventuell liegt eine Punkt-zu-Punkt Verbindung zwischen dem Zertifizierungsmodul (bzw. Hardware, auf welcher dieses implementiert ist) und der wenigstes einen Komponente vor (etwa Serialkalbel-Verbindung, USB-Kabel, usw.). Es kann insbesondere eine direkte kabelgebundene oder kabellose Verbindung bestehen bzw. hergestellt werden.

Analoges kann für das Abfragen der wenigstens einen Komponentenkennung gelten. So kann vorgesehen sein, dass das Zertifizierungsmodul in Schritt b) die wenigstens eine Komponentenkennung von der wenigstens einen Komponente abfragt, wobei hierfür eine direkte Verbindung zwischen dem Zertifizierungsmodul bzw. zwischen Hardware, auf welcher das Zertifizierungsmodul implementiert ist, und der wenigstens einen Komponente besteht bzw. hergestellt wird.

Ein weiterer Gegenstand der Erfindung ist ein System zur Vergabe von öffentlich getrusteten Zertifikaten für Anlagenkomponenten einer technischen Anlage, umfassend ein Zertifizierungsmodul und eine Registrierungsstelle,
wobei das Zertifizierungsmodul dazu ausgebildet und/oder eingerichtet ist, von wenigstens einer Anlagenkomponente, die ein öffentlich getrustetes Zertifikat erhalten soll, wenigstens eine bevorzugt eindeutige Komponentenkennung abzufragen und/oder für wenigstens eine Anlagenkomponente, die ein öffentlich getrustetes Zertifikat erhalten soll, wenigstens eine bevorzugt eindeutige Komponentenkennung zu generieren, und die Registrierungsstelle dazu ausgebildet und/oder eingerichtet ist, anhand der wenigstens einen Komponentenkennung zu überprüfen, ob die wenigstens eine zu der Komponentenkennung gehörige Komponente wenigstens einer berechtigten Person oder wenigstens einem berechtigten Unternehmen zugeordnet ist, insbesondere Eigentum wenigstens einer berechtigten Person oder wenigstens eines berechtigten Unternehmens darstellt, und für den Fall, dass dem so ist, ein öffentlich getrustetes Zertifikat für die wenigstens eine Komponente anzufordern,
und das Zertifizierungsmodul dazu ausgebildet und/oder eingerichtet ist, das angeforderte öffentlich getrustete Zertifikat zu empfangen und bevorzugt in einem geschützten Bereich zu speichern.

Das erfindungsgemäße System ist für die Durchführung des erfindungsgemäßen Verfahrens besonders geeignet.

In Weiterbildung umfasst das erfindungsgemäße System eine Datenbank, in der Komponentenkennungen zusammen mit zugehörigen berechtigten Personen und/oder Unternehmen, die bevorzugt Eigentümer zugehöriger Komponenten darstellen, gespeichert sind, und ist die Registrierungsstelle dazu ausgebildet und/oder eingerichtet, für die oder im Rahmen der Überprüfung, ob die wenigstens eine zu der Komponentenkennung gehörige Komponente wenigstens einer berechtigten Person oder wenigstens einem berechtigten Unternehmen zugeordnet ist, in der Datenbank nach wenigstens einem Eintrag für die zusammen mit dem Zertifikatsantrag übermittelte wenigstens eine Komponentenkennung zu suchen.

Das Zertifizierungsmodul bildet bevorzugt ein (lokales) "Frontend" bzw. eine (lokale) "Frontend"-Einheit des Systems bzw. ist Bestandteil eines bzw. einer solchen. Die Registrierungsstelle ist - ggf. zusammen mit einer Datenbank und einer Zertifizierungsstelle - bevorzugt Teil eines (zentralen) "Backends" bzw. einer zentralen "Backend"-Einheit des Systems. Das Zertifizierungsmodul befindet sich bevorzugt vor Ort bei oder in der technischen Anlage, während der Registrierungsdienst sich bevorzugt entfernt von dieser, etwa in einem Rechenzentrum befindet. Der Registrierungsdienst kann insbesondere von mehreren Zertifizierungsmodulen, die sich bei/in verschiedenen Anlagen befinden können, kontaktiert werden und Zertifikatsanträge zusammen mit Komponentenkennungen erhalten.

Neben der Registrierungsstelle - und ggf. einer Datenbank - kann eine Zertifizierungsstelle weiterer Bestandteil eines "Backends" / einer "Backend"-Einheit des Systems sein. Alternativ oder zusätzlich kann eine separate/externe Zertifizierungsstelle existieren, die der Registrierungsstelle des erfindungsgemäßen Systems vertraut. Eine separate/externe Zertifizierungsstelle kann durch eine Zertifizierungsstelle wie VeriSign oder eine andere bekannte Zertifizierungsstelle gegeben sein, die bevorzugt ein Trusted Root Certificate (TRC) besitzt.

Die Erfindung betrifft darüber hinaus ein Engineering- oder Leitsystem für eine technisch Anlage umfassend ein Zertifizierungsmodul, das dazu ausgebildet und/oder eingerichtet ist,
- von wenigstens einer Anlagenkomponente, die ein öffentlich getrustetes Zertifikat erhalten soll, wenigstens eine bevorzugt eindeutige Komponentenkennung abzufragen und/oder für wenigstens eine Anlagenkomponente, die ein öffentlich getrustetes Zertifikat erhalten soll, wenigstens eine bevorzugt eindeutige Komponentenkennung zu generieren,
- die wenigstens eine abgefragte und/oder wenigstens eine generierte Komponentenkennung zusammen mit einem Zertifikatsantrag für ein öffentlich getrustetes Zertifikat für die wenigstens eine Komponente an eine Registrierungsstelle (RA) zu übermitteln,
- ein öffentlich getrustetes Zertifikat für die Anlagenkomponente zu empfangen und bevorzugt in einem geschützten Bereich zu speichern.

Das Zertifizierungsmodul kann eine Inspektionseinheit und/oder eine Deployment-Einheit umfassen.

Ist eine Inspektionseinheit vorhanden, ist diese bevorzugt dazu ausgebildet und/oder eingerichtet, von der wenigstens einen Komponente, die das öffentlich getrustete Zertifikat erhalten soll, wenigstens eine bevorzugt eindeutige Komponentenkennung abzufragen (mit anderen Worten auszulesen) und/oder für die wenigstens eine Komponente, die das öffentlich getrustete Zertifikat erhalten soll, wenigstens eine bevorzugt eindeutige Komponentenkennung zu generieren.

Ist eine Deployment-Einheit vorhanden, ist diese bevorzugt dazu ausgebildet und/oder eingerichtet, ein erstelltes öffentlich getrustetes Zertifikat an die (jeweilige) Komponente zu übermitteln, also auf diese aufzuspielen. Sie ist bevorzugt dazu ausgebildet und/oder eingerichtet, von einer Zertifizierungsstelle erstellte öffentlich getrustete Zertifikate zu empfangen, um diese dann an die (jeweilige) Komponente weitergeben zu können.

Schließlich betrifft die Erfindung eine technische Anlage, insbesondere Fertigungs- oder Prozessanlage. Die erfindungsgemäße technische Anlage umfasst bevorzugt wenigstens ein erfindungsgemäßes Engineering- oder Leitsystem.

Im Rahmen der erfindungsgemäßen Vorgehensweise kann alternativ oder zusätzlich auch ein Gateway- und/oder Edge-Gerät genutzt werden. Es kann insbesondere vorgesehen sein, dass das Zertifizierungsmodul auf einem Edge-Gerät vorgesehen/implementiert ist. Das Zertifizierungsmodul kann zum Beispiel als App auf einem Edge-Gerät/-Device ausgeführt werden. Kommt ein Edge-Gerät zum Einsatz, kann die Anforderung (Zertifikatsanträge), Erneuerung und das sichere Einspielen von öffentlich getrusteten Zertifikaten auf den Komponenten, etwa Geräten im lokalen Netzwerk einer technischen Anlage voll-automatisch erfolgen, während das Gateway-/Edge-Gerät auch einen Zugang zum Internet und der öffentlichen Infrastruktur erlaubt. Ein Edge-Gerät liegt zweckmäßiger Weise (wie der Name sagt) an der Außenkante des geschlossenen Netzwerkes und hat zwei Netzzugänge/Netzwerkadapter. Das Edge-Gerät befindet sich damit dann insbesondere sowohl im geschlossenen internen Netz als auch im öffentlichen Internet. Die Geräte bzw. Komponenten im geschlossenen Netzwerk haben hingegen meist keinen Zugang zum Internet. Das ist insbesondere im Betrieb zum automatischen Erneuern praktisch, da das Engineering-System nicht benötigt wird und man auch nicht das Zertifizierungsmodul erst intern verwendet, um die Kennung zu erhalten, um dann manuell damit in das öffentliche Internet zu wechseln.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich.

Die Figur zeigt eine Anlagenkomponente G und ein Ausführungsbeispiel eines erfindungsgemäßen Systems zur Vergabe von öffentlich getrusteten Zertifikaten in rein schematischer Darstellung.

Die Anlagenkomponente G ist bei dem hier beschriebenen Beispiel durch eine speicherprogrammierbare Steuerung, kurz SPS, gegeben und Bestandteil einer nicht weiter dargestellten technischen Anlage, insbesondere Fertigungs- oder Prozessanlage. Die Anlage umfasst in an sich bekannter Weise u.a. noch eine Mehrzahl von Sensoren, welche Messwerte für die Steuerung G liefern, sowie Aktoren, welche Stellwerte von der Steuerung G empfangen. So kann ein in der Anlage ablaufender Prozess überwacht und auf diesen eingewirkt werden.

Die Steuerung G ist mit den Sensoren und Aktoren sowie weiteren Anlagenkomponenten in an sich bekannter Weise über ein Anlagennetzwerk verbunden. Das Anlagennetzwerk ist ein lokales, geschlossenes Netzwerk und die Steuerung G ist nicht von außen via Internet erreichbar.

Die Steuerung G zeichnet sich durch eine eindeutige Komponentenkennung K aus, die bei dem hier beschriebenen Ausführungsbeispiel durch ein Gerätezertifikat K gegeben ist.

Insbesondere, damit es möglich wird, dass sich Benutzer Daten der Steuerung G auch auf mobilen Endgeräten ansehen können, soll die Steuerung G ein Zertifikat erhalten.

Im Fall von Browsern auf Client-Endgeräten müssen dafür Zertifikate in der gesamten Zertifikatskette bis hin zu allgemein anerkannten Trusted Root Certificates TRC verifizierbar sein (siehe beispielsweise die "Root CA Policy" von Google Chrome). Bei diesen handelt es sich um eine Handvoll von Zertifikaten, die browser- und
betriebssystemübergreifend als vertrauenswürdig eingestuft werden und nicht individuell installiert werden müssen.

Die Steuerung G bzw. ein Webserver auf dieser soll ein solches, bis hin zu einem Trusted Root Zertifikat TRC verifizierbares Zertifikat erhalten, welches auch als öffentlich getrustetes Zertifikat C bezeichnet wird.

Die Steuerung G weist einen fälschungssicheren Certificate Store CS, der in an sich bekannter Weise dazu dient, ein digitales Zertifikat sicher zu verwahren bzw. zu speichern. In dem Certifcate Store CS kann ein solches öffentlich getrustetes Zertifikat C abgelegt werden.

Um öffentlich anerkannte (getrustete) Zertifikate C ausstellen zu können, muss eine CA in der Lage sein sicherzustellen, dass die Zertifikat-anfordernde Person bzw. das Zertifikat-anfordernde Unternehmen tatsächlich die Kontrolle und/oder Verantwortung über die Komponente bzw. einen darauf implementierten Server und die darauf zeigende Domäne hat. Dies kann gemäß dem Stand der Technik über die Erreichbarkeit der entsprechenden Komponente/des entsprechenden Servers gewährleistet werden - was jedoch in der industriellen Anlage nicht gegeben ist.

Es ist daher ein erfindungsgemäßes System S zur Vergabe von öffentlich getrusteten Zertifikaten C für Anlagenkomponenten G einer technischen Anlage vorgesehen, welches dafür verwendet werden kann, ein solches Zertifikat C für die Steuerung G zu beschaffen und in dieser abzulegen (auch als "Deployment" bezeichnet).

Das in der Figur dargestellte Ausführungsbeispiel eines solchen erfindungsgemäßen Systems S umfasst ein Zertifizierungsmodul ZM, welches eine "Frontend"-Einheit bzw. "Frontend"-Komponente des Systems 1 darstellt und sich vor Ort bei bzw. in der technischen Anlage befindet. Das Zertifizierungsmodul ZM ist vorliegend in ein Engineering System ES der technischen Anlage integriert. Es ist konkret eine funktionale Einheit bzw. ein funktionales Modul, welches durch Software implementiert ist, die sich auf Hardware des Engineering Systems ES befindet. Das Engineering System bildet einen Bestandteil des dargestellten Ausführungsbeispiels eines erfindungsgemäßen Systems S zur Vergabe von öffentlich getrusteten Zertifikaten. Das Engineering System ES kann auf Standard-Hardware, etwa einem üblichen PC oder Industrie-PC laufen.

Es sei angemerkt, dass es alternativ dazu, dass das Zertifizierungsmodul ZM - wie bei dem dargestellten Beispiel - in ein Engineering System S der Anlage integriert ist, dieses auch ein Stand-Alone-Tool bzw. Stand-Alone-Modul darstellen bzw. Teil eines anderen Tools sein kann. Dann besteht zweckmäßiger Weise eine funktionale Verbindung zwischen dem Engineering System ES und dem Zertifizierungsmodul ZM. Das Zertifizierungsmodul ZM kann auch auf einem Edge-Gerät implementiert sein, welches an der Außenkante des geschlossenen Anlagennetzwerkes liegt und zwei Netzzugänge/Netzwerkadapter hat, so dass es sich sowohl im geschlossenen internen Anlagennetz als auch im öffentlichen Internet befindet.

Das Engineering System ES hat eine sehr genaue Kenntnis über die Automatisierungs-Produkte in einer technischen Anlage. So kennt es die exakte Hardware (z.B. anhand der Seriennummer) oder das konkrete Produkt (z.B. anhand der MLFB), ist aber auch in der Lage eine Komponente, wie die Steuerung G, eindeutig zu identifizieren oder identifizierbar zu machen (z.B. über ein fest eingebranntes oder sicher aufspielbares Maschinen- oder Geräte-Zertifikat). Ebenso besitzt das Engineering System ES in der Regel ohnehin Möglichkeiten, Daten sicher auf die entsprechenden Komponenten, etwa Automatisierungs-Geräte zu übertragen (im Sinne von fälschungssicher sowie nicht durch Dritte einseh- bzw. mitlesbar).

Das erfindungsgemäße System S umfasst neben dem Engineering System ES mit dem Zertifizierungsmodul ZM weiterhin ein Backend bzw. eine Backend-Einheit BE mit einer Registrierungsstelle RA, einer Datenbank D und einer Zertifizierungsstelle CA. Das Backend bzw. die Backend-Einheit BE ist nicht vor Ort bei der Anlage angeordnet, sondern befindet sich in einem Rechenzentrum, welches beispielsweise einige bzw. viele Kilometer von der Anlage entfernt ist. Eine Kommunikation zwischen dem Zertifizierungsmodul ZM und dem Backend BE ist über das öffentliche Internet möglich.

Dass sich das Engineering System ES mit dem Zertifizierungsmodul ZM und die Steuerung G im Gegensatz zu dem Backend BE vor Ort bei bzw. in der technischen Anlage befinden, konkret einen Bestandteil dieser bilden, ist in der Figur durch eine geschwungene Klammer am Rand angedeutet, welche die Komponenten vor Ort zusammenfasst.

Das Zertifizierungsmodul ZM ist dazu ausgebildet, mit Komponenten G der Anlage zu kommunizieren.

Das Zertifizierungsmodul ZM umfasst eine Inspektionseinheit IE, die dazu ausgebildet ist, von Komponenten G, die ein öffentlich getrustetes Zertifikat C erhalten sollen, bevorzugt eindeutige Komponentenkennungen K abzufragen (mit anderen Worten auszulesen) sowie für Komponenten G, die ein öffentlich getrustetes Zertifikat C erhalten sollen, bevorzugt eindeutige Komponentenkennungen K zu generieren. Die Abfrage bzw. das "Probing" ist in der Figur durch einen von der Inspektionseinheit IE zu dem die Komponentenkennung K bildenden Gerätezertifikat weisenden Pfeil angedeutet.

Die Inspektionseinheit IE ist ferner dazu ausgebildet, abgefragte und/oder generierte Komponentenkennungen K jeweils zusammen mit einem Zertifikatsantrag CSR für ein öffentlich getrustetes Zertifikat C für die jeweilige Komponente G an die Registrierungsstelle RA zu übermitteln. Die Übermittlung ist in der Figur durch einen von der Inspektionseinheit IE zu der Registrierungsstelle RA weisenden Pfeil angedeutet, neben dem beispielhaft eine Zertifikatsanfrage CSR für die Steuerung G zusammen mit dem Gerätezertifikat K der Steuerung G rein schematisch dargestellt ist.

Das Zertifizierungsmodul ZM weist darüber hinaus eine Deployment-Einheit DE auf, die dazu ausgebildet ist, öffentlich getrustete Zertifikate C an die (jeweilige) Komponente G zu übermitteln, also auf diese aufzuspielen. Sie ist dazu ausgebildet, von der Zertifizierungsstelle CA erstellte bzw. beschaffte öffentlich getrustete Zertifikate C zu empfangen und diese dann an die (jeweilige) Komponente G weiterzugeben. Dies ist in der Figur durch Pfeile angedeutet, von der Zertifizierungsstelle CA zu der Deployment-Einheit DE und von dieser zu dem Certificate Store CS der Steuerung G weisen und neben denen jeweils ein Zertifikat C rein schematisch dargestellt ist.

Die Registrierungsstelle RA ist dazu ausgebildet, anhand der wenigstens einen Komponentenkennung K zu überprüfen, ob die wenigstens eine zu der Komponentenkennung K gehörige Komponente, vorliegend die Steuerung G wenigstens einer berechtigten Person oder wenigstens einem berechtigten Unternehmen zugeordnet ist, insbesondere Eigentum wenigstens einer berechtigten Person oder wenigstens eines berechtigten Unternehmens darstellt, und für den Fall, dass dem so ist, ein öffentlich getrustetes Zertifikat C für die wenigstens eine Komponente G anzufordern. Die Registrierungsstelle RA ist in der Lage, anhand übermittelter eindeutigen Komponentenmerkmale K eine rechtlich bindende Kundenzuordnung zu validieren.

Unter Verwendung des dargestellten Ausführungsbeispiels eines erfindungsgemäßen Systems S kann ein Ausführungsbeispiel des erfindungsgemäßen Verfahrens zur Vergabe von öffentlich getrusteten Zertifikaten C für Anlagenkomponenten G einer technischen Anlage durchgeführt werden.

Dabei fragt in einem ersten Schritt das Zertifizierungsmodul ZM von der Steuerung G, die ein öffentlich getrustetes Zertifikat erhalten soll, wenigstens eine bevorzugt eindeutige Komponentenkennung, vorliegend das Gerätezertifikat K ab. Das Zertifizierungsmodul ZM, welches vorliegend in das Engineering System der Anlage integriert ist, hat direkten Zugriff auf die Steuerung G, so dass diese Abfrage problemlos möglich ist. Das Engineering System G ist Teilnehmer des geschlossenen Anlagennetzes, so dass es - und somit das integrierte Zertifizierungsmodul ZM - auf die Steuerung G Zugriff hat.

Alternativ oder zusätzlich zu dem Abfragen/Auslesen der wenigstens einen Komponentenkennung K kann das Zertifizierungsmodul ZM für die Steuerung G, die ein öffentlich getrustetes Zertifikat erhalten soll, auch wenigstens eine bevorzugt eindeutige Komponentenkennung, vorliegend ein (ggf. vorübergehendes) Gerätezertifikat generieren.

Dies ist vor allem dann vorteilhaft, wenn wenigstens eine Komponente, etwa die Steuerung G noch nicht in Betrieb genommen wurde, sondern dies ggf. erst noch projektiert wird. Mit anderen Worten wird auch ein Offline- bzw. Vorab-Engineering unterstützt. Dies macht es auch möglich, dass sich das Engineering Systems ES (noch) nicht im Anlagennetz befinden muss. Durch die Generierung wenigstens einer eindeutigen Kennung K durch das Zertifizierungsmodul ZM werden die Komponenten eindeutig identifizierbar. Öffentlich getrustete Zertifikate C können dann bereits vorab angefordert und erzeugt werden und im Zertifizierungsmodul ZM intern für die projektierte Komponente G vorgehalten werden. Später bei einer Inbetriebnahme stellt das Zertifizierungsmodul ZM dann bevorzugt sicher, dass die wenigstens eine Komponentenkennung K tatsächlich vorliegt bzw. fälschungssicher eingebracht werden kann. Wenn dies sichergestellt wurde, kann auch das öffentlich getrustete Zertifikat C dorthin transferiert werden.

Im Anschluss an das Abfragen und/oder Generieren der wenigstens einen Komponentenkennung, vorliegend des abgefragten Gerätezertifikates K übermittelt das Zertifizierungsmodul ZM dieses zusammen mit einem Zertifikatsantrag CSR für ein öffentlich getrustetes Zertifikat C für die Steuerung G an eine Registrierungsstelle RA.

Der Zertifikatsantrag CSR, den das Zertifizierungsmodul ZM an die Registrierungsstelle RA übermittelt, kann dabei von dem Zertifizierungsmodul ZM oder auch von der Steuerung G erstellt werden bzw. worden sein.

Die Registrierungsstelle RA überprüft dann anhand des Gerätezertifikates K, ob die wenigstens eine zu der Komponentenkennung K gehörige Steuerung G wenigstens einer berechtigten Person oder wenigstens einem berechtigten Unternehmen, in deren oder dessen Verantwortung die Steuerung steht, zugeordnet ist. Diese Überprüfung erfolgt bei dem dargestellten Ausführungsbeispiel, indem die Registrierungsstelle RA die Datenbank D, in der Komponentenkennungen K, u.a. Gerätezertifikate K, zusammen mit zugehörigen berechtigten Personen und/oder Unternehmen, die Eigentümer von zu den Komponentenkennungen K gehörigen Komponenten G darstellen, gespeichert sind, nach wenigstens einem Eintrag für die zusammen mit dem Zertifikatsantrag CSR übermittelte Komponentenkennung, vorliegend dem Gerätezertifikat K der Steuerung G, sucht.

Wird ein Eintrag für die mit dem Zertifikatsantrag CSR übermittelte Komponentenkennung K in der Datenbank gefunden, wird der Zertifikatsantrag CSR von der Registrierungsstelle RA genehmigt/validiert.

Es sei angemerkt, dass ein solcher Eintrag in der Datenbank bevorzugt erstellt wurde, nachdem ein Kunde die Steuerung G gekauft hat und somit der Eigentümer wurde. Über den Abruf bzw. die Suche in der Datenbank D kann somit geprüft werden, ob die Steuerung G im Besitz eines berechtigten Kunden steht oder nicht.

Weiterhin sei angemerkt, dass es natürlich möglich ist, dass gemäß der Datenbank D mehrere baugleiche Komponenten, etwa Steuerungen G existieren, die einer Person bzw. einem Unternehmen zugeordnet sind, insbesondere einer Person bzw. einem Unternehmen gehören. Ist dies der Fall, wird der Zertifikatsantrag CSR genehmigt und die Anzahl potentieller Treffer also baugleicher Komponenten G in der Datenbank um eins reduziert.

Die Registrierungsstelle RA fordert in einem nächsten Schritt das öffentlich getrustete Zertifikat C bei der Zertifizierungsstelle CA an, insbesondere, indem sie den Zertifikatsantrag CSR an die Zertifizierungsstelle CA weiterleitet.

Die Zertifizierungsstelle CA erstellt oder beschafft dann das angeforderte öffentlich getrustete Zertifikat C für die Steuerung G. Dabei kontaktiert die einen Teil des Backends BE darstellende Zertifizierungsstelle CA bei dem hier beschriebenen Beispiel eine weitere, zentrale Zertifizierungsstelle zCA, die über ein Trusted Root Zertifikat TRC verfügt. Da die zCA eine Vertrauensstellung mit der CA besitzt, führt diese den CSR direkt aus.

Von bzw. in der Registrierungsstelle CA oder zCA des Backends BE wird ein Zertifikat C erstellt.

Das Zertifikat C wird zusammen mit zugehörigem Schlüsselmaterial an die Deployment-Einheit DE des Zertifizierungsmoduls ZM weitergeleitet, dort oder an einer anderen Stelle in dem Engineering System Es in einem geschützten Bereich, der nicht von außen gelesen oder verändert werden kann, gespeichert.

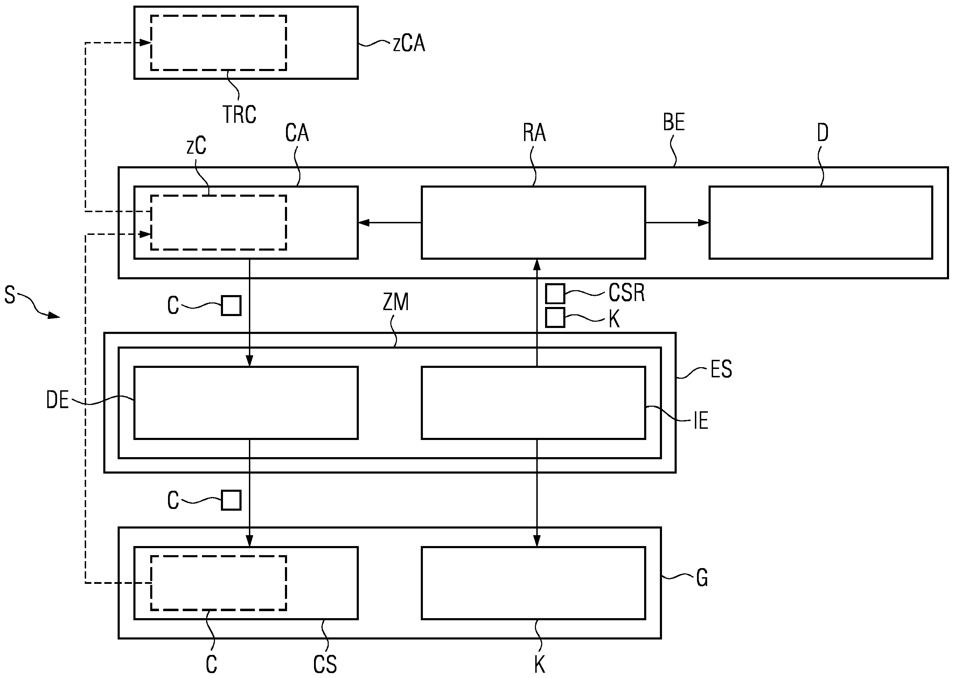

Das Zertifikat C und zugehörige Schlüsselmaterial werden ferner von der Deployment-Einheit "deployed", also in die Steuerung G eingebracht, konkret in dem Certificate Store CS sicher abgelegt. Dies ist in der Figur 1 erneut durch entsprechende Pfeile angedeutet.

Das Zertifikat C (kann auch als Kundenzertifikat bzw. englisch customer certificat bezeichnet werden) weist bei dem dargestellten Ausführungsbeispiel auf ein Zwischenzertifikat zC der CA, das wiederum auf das Trusted Root Certificate TRC der zCA verweist. In der Figur ist diese Zertifikatskette durch Pfeile mit gestrichelter Linie angedeutet. Man kann auch sagen, dass diese Pfeile den "Trust", also das Vertrauen zwischen den Stellen bzw. Zertifikaten andeuten. Das TRC ist, wie man sieht, das Ende der Zertifikatkette. Das (Kunden-)Zertifikat C in der Komponente G muss über die ganze Kette bis zum TRC der zCA gültig sein.

Es sei angemerkt, dass eine zentrale Zertifizierungsstelle zCA vorgesehen und con den CA kontaktiert werden kann jedoch nicht muss. Alternativ zu dem in der Figur dargestellten Ausführungsbeispiel ist es auch möglich, dass die CA direkt Zertifikate C ausstellt, ohne auf externes Mitwirken einer weiteren CA angewiesen zu sein. Dies vor allem, wenn die CA gültiges Schlüsselmaterial besitzt.

Falls das ES eine vorläufige, nicht abgerufene, sondern generierte Kennung K verwendet hat, wird die nun die eindeutige Kennung K aus der Komponente G abgefragt und an das Backend BE zurück übermittelt. Dort kann die vorläufige Kennung nun mit der tatsächlichen ersetzt werden. (Falls das ES vorab eine eindeutige Kennung K erzeugt hat und diese in die Komponente G eingebracht werden konnte, entfällt die Rückübermittlung, oder aber es werden weitere Kennzeichen, wie die Seriennummer zur korrekten Zuordnung in der Datenbank D übertragen.)

Weiterhin sei angemerkt, dass für den Fall, dass die RA in der Datenbank keinen Eintrag für die mit dem CSR übermittelte Komponentenkennung K finden könnte, der Antrag CSR abgelehnt und kein Zertifikat C erstellt würde.

Das Engineering System ES mit dem Zertifizierungsmodul ZM kann folgende drei Varianten unterstützen:
- Online Engineering: Die Komponenten/Server sind in der Anlage bereits installiert. Das ES kann hier Merkmale auslesen, eine Komponente G eindeutig identifizieren (und sicherstellen, dass es keine weitere Instanz gibt, welche dieselben Merkmale aufweist) und Daten sowie Zertifikate C auf die Komponente G sicher transferieren.
- Offline Engineering: Die Komponenten/Server sind noch nicht in der Anlage installiert, sondern diese wird ggf. erst noch projektiert. Hierbei wird das Engineering System ES die für die Zielkomponente G notwendigen eindeutigen Merkmale (wenigstens eine Komponentenkennung K) eventuell erst erzeugen (z.B. ein Maschinenzertifikat). Zertifikate C können dann jedoch bereits vorab angefordert und erzeugt werden aber im Engineering System ES, konkret dem Zertifizierungsmodul ZM intern für die projektierte Komponente G vorgehalten werden. Später bei einer Inbetriebnahme stellt das ES sicher, dass die eindeutigen Merkmale tatsächlich vorliegen bzw. fälschungssicher eingebracht werden können. Wenn dies sichergestellt wurde, kann auch das bereits vorgehaltene Zertifikat C dorthin transferiert werden.
- Indirekter Offline-Fall: In der Automatisierung existiert der Sonderfall, dass teils gar nicht die tatsächliche Komponente G, sondern ein Stellvertreter, etwa eine SD-Karte oder ein (USB-)Dongle mit der Konfiguration versehen wird. So kann z.B. eine SD-Karte/ein Dongle beim Download die komplette Konfiguration für eine SPS G erhalten, die tatsächlich Steuerung G im Ersatzteilfall jedoch sofort ausgewechselt werden. Der Download erfolgt dabei also nur indirekt auf das tatsächliche Gerät G. In diesem Fall muss jedoch der Stellvertreter, also die Karte/der Dongle, eindeutig zu identifizieren sein und muss vor unerlaubtem Zugriff geschützt sein - die Daten in einem geschützten Bereich dieser bzw. dieses dürfen also nicht ohne Weiteres auslesbar sein.

In allen drei Fällen hat das Engineering System ES zumindest zu irgendeinem Zeitpunkt Zugriff auf die zu validierenden Komponenten G.

Im Online-Fall kann das Zertifikat C mit Begleitmaterial direkt für die Zielkomponente G verschlüsselt werden. So ist gewährleistet, dass das Zertifikat C durchgängig abgesichert ist und ausschließlich dort entschlüsselt werden kann. Darüber hinaus kann jedes Projekt im Engineering System ES mit einem (künden)spezifischen Schlüssel versehen werden, so dass im Offline-Fall die CA den Transport zumindest bis zum ES absichern kann. Im jeweiligen Projekt kann wiederum das Material für das konkrete Endgerät G verschlüsselt werden. Somit ist ebenfalls eine durchgängige Absicherung möglich.

Es sei angemerkt, dass das Engineering System ES, in welches das Zertifizierungsmodul ZM integriert ist, bzw. von dem das Zertifizierungsmodul ZM einen Bestandteil bildet, ein Ausführungsbeispiel eines erfindungsgemäßen Engineering Systems einer technischen Anlage bzw. für eine Technische Anlage darstellt.

Die technische Anlage, von der die Steuerung G und das Engineering Systems ES einen Bestandteil bilden, ist ferner ein Ausführungsbeispiel einer erfindungsgemäßen technischen Anlage.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Es versteht sich beispielsweise, dass auch wenn die erfindungsgemäßen Ausführungsformen vorstehend beispielshaft anhand einer Komponente einer technischen Anlage, konkret einer Steuerung G erläutert wurden, selbstverständlich für beliebig viele weitere Komponenten auf entsprechende Weise öffentlich getrustete Zertifikate C beantragt und ggf. erstellt und an diese übermittelt werden können. Dabei kann für mehrere Komponenten einer technischen Anlage (oder auch mehrerer technischer Anlagen) ein Zertifizierungsmodul ZM bzw. ein erfindungsgemäßes System S genutzt werden.

Insbesondere das Backend BE eines erfindungsgemäßen Systems kann auch eine Zentrale darstellen, die mit mehreren Zertifizierungsmodulen ZM kommuniziert und auf die Anfragen mehrere Zertifizierungsmodule ZM, ggf. verschiedener Anlagen, öffentlich getrustete Zertifikate C erstellt und an die mehreren Zertifizierungsmodule ZM übermittelt.

## Patentansprüche

1. Verfahren zur Vergabe von öffentlich getrusteten Zertifikaten (C) für Anlagenkomponenten (G) einer technischen Anlage, bei dem
a) ein Zertifizierungsmodul (ZM) von wenigstens einer Anlagenkomponente (G), die ein öffentlich getrustetes Zertifikat (C) erhalten soll, wenigstens eine bevorzugt eindeutige Komponentenkennung (K) abfragt und/oder für wenigstens eine Anlagenkomponente (G), die ein öffentlich getrustetes Zertifikat (C) erhalten soll, wenigstens eine bevorzugt eindeutige Komponentenkennung (K) generiert,
b) das Zertifizierungsmodul (ZM) die wenigstens eine abgebfragte und/oder wenigstens eine generierte Komponentenkennung (K) zusammen mit einem Zertifikatsantrag (CSR) für ein öffentlich getrustetes Zertifikat (C) für die wenigstens Komponente (G) an eine Registrierungsstelle (RA) übermittelt,
c) die Registrierungsstelle (RA) anhand der wenigstens einen Komponentenkennung (K) überprüft, ob die wenigstens eine zu der Komponentenkennung (K) gehörige Komponente (G) wenigstens einer berechtigten Person oder wenigstens einem berechtigten Unternehmen, in deren oder dessen Verantwortung die wenigstens eine Komponente (G) steht, zugeordnet ist,
d) die Registrierungsstelle (RA) für den Fall, dass dem so ist, ein öffentlich getrustetes Zertifikat (C) für die wenigstens eine Komponente (G) anfordert,
e) das angeforderte öffentlich getrustete Zertifikat (C) erstellt und an das Zertifizierungsmodul (ZM) übermittelt und bevorzugt in einem geschützten Bereich insbesondere des Zertifizierungsmoduls (ZM) gespeichert wird.

2. Verfahren nach Anspruch 1, **dadurch gekennzeichnet, dass** die Registrierungsstelle (RA) das öffentlich getrustete Zertifikat (C) in Schritt d) bei einer Zertifizierungsstelle (CA) anfordert, insbesondere, indem sie den Zertifikatsantrag (CSR) validiert und/oder an die Zertifizierungsstelle (CA) weiterleitet, und die Zertifizierungsstelle (CA) das angeforderte öffentlich getrustete Zertifikat (C) für die wenigstens eine Komponente (G) erstellt oder beschafft.

3. Verfahren nach Anspruch 1 oder 2, **dadurch gekennzeichnet, dass** das Zertifizierungsmodul (ZM) das öffentlich getrustete Zertifikat (C) an die wenigstens eine Komponente (G) oder an eine mit der wenigstens einen Komponente (G) verbundenen oder verbindbare Speichereinrichtung übermittelt, wobei das öffentlich getrustete Zertifikat (C) bevorzugt in einem fälschungssicheren Zertifikatsspeicher (CS) der wenigstens einen Komponente (G) oder der mit der wenigstens einen Komponente (G) verbundenen oder verbindbaren Speichereinrichtung abgelegt wird.

4. Verfahren nach Anspruch 3, **dadurch gekennzeichnet, dass** für die Übermittlung des öffentlich getrusteten Zertifikats (C) von dem Zertifizierungsmodul (ZM) an die wenigstens eine Komponente (G) und/oder an die mit der wenigstens einen Komponente (G) verbundenen oder verbindbare Speichereinrichtung eine direkte Verbindung zwischen dem Zertifizierungsmodul (ZM) bzw. zwischen Hardware, auf welcher das Zertifizierungsmodul (ZM) implementiert ist, und der wenigstens einen Komponente (G) und/oder der mit der wenigstens einen Komponente (G) verbundenen oder verbindbaren Speichereinrichtung besteht bzw. hergestellt wird.

5. Verfahren nach Anspruch 3 oder 4, **dadurch gekennzeichnet, dass** für den Fall, dass von dem Zertifizierungsmodul (ZM) in Schritt a) keine Komponentenkennung (K) abgefragt wurde, das Zertifizierungsmodul (ZM) vor der Übermittlung des öffentlich getrusteten Zertifikats (C) an die wenigstens eine Komponente (G) wenigstens eine Komponentenkennung (K) von der wenigstens einen Komponente (G) abfragt und die abgefragte Komponentenkennung (K) bevorzugt an die Registrierungsstelle (RA) übermittelt.

6. Verfahren nach einem der vorhergehenden Ansprüche, **dadurch gekennzeichnet, dass** der Zertifikatsantrag (CSR), den das Zertifizierungsmodul (ZM) in Schritt b) an die Registrierungsstelle (RA) übermittelt, von dem Zertifizierungsmodul (ZM) oder von der wenigstens einen Komponente (G) erstellt wird.

7. Verfahren nach einem der vorhergehenden Ansprüche, **dadurch gekennzeichnet, dass** für den Fall, dass die Überprüfung in Schritt c) ergibt, dass mehrere zu der wenigstens einen Komponentenkennung (K) gehörige Komponenten (G) wenigstens einer berechtigten Person oder wenigstens einem berechtigten Unternehmen zugeordnet sind, insbesondere Eigentum wenigstens einer berechtigten Person oder wenigstens eines berechtigten Unternehmens darstellen, die insbesondere in einer Datenbank hinterlegte verfügbare Anzahl potentieller Treffer um eins reduziert wird.

8. Verfahren nach einem der vorhergehenden Ansprüche, **dadurch gekennzeichnet, dass** in Schritt a) eine Seriennummer und/oder ein Geräte- bzw. Maschinenzertifikat (K) und/oder ein Fingerprint und/oder eine Typenbezeichnung als Komponentenkennung abgefragt und/oder generiert wird.

9. Verfahren nach einem der vorhergehenden Ansprüche, **dadurch gekennzeichnet, dass** die Überprüfung in Schritt c) einschließt, dass die Registrierungsstelle (RA) in einer Datenbank (D), in der Komponentenkennungen (K) zusammen mit zugehörigen berechtigten Personen und/oder Unternehmen, die bevorzugt Eigentümer zugehöriger Komponenten darstellen, gespeichert sind, nach wenigstens einem Eintrag für die zusammen mit dem Zertifikatsantrag (CSR) übermittelte wenigstens eine Komponentenkennung (K) sucht.

10. Verfahren nach einem der vorhergehenden Ansprüche, **dadurch gekennzeichnet, dass** das Zertifizierungsmodul (ZM) in Schritt b) die wenigstens eine Komponentenkennung (K) von der wenigstens einen Komponente (G) abfragt, wobei hierfür eine direkte Verbindung zwischen dem Zertifizierungsmodul (ZM) bzw. zwischen Hardware, auf welcher das Zertifizierungsmodul (ZM) implementiert ist, und der wenigstens einen Komponente (G) besteht bzw. hergestellt wird.

11. Verfahren nach einem der vorhergehenden Ansprüche, **dadurch gekennzeichnet, dass** sich das Zertifizierungsmodul (ZM) vor Ort bei der technischen Anlage befindet, insbesondere auf Hardware implementiert ist, die einen Bestandteil der technischen Anlage und/oder eines Leitsystems einer solchen bildet und/oder sich in der gleichen Halle befindet wie die technische Anlage.

12. Verfahren nach einem der vorhergehenden Ansprüche, **dadurch gekennzeichnet, dass** das Zertifizierungsmodul (ZM) Bestandteil eines Engineering Systems (ES) der technischen Anlage oder mit einem Engineering System (ES) der technischen Anlage funktional verbunden ist.

13. System (S) zur Vergabe von öffentlich getrusteten Zertifikaten (C) für Anlagenkomponenten (G) einer technischen Anlage, umfassend ein Zertifizierungsmodul (ZM) und eine Registrierungsstelle (RA),
wobei das Zertifizierungsmodul (ZM) dazu ausgebildet und/oder eingerichtet ist, von wenigstens einer Anlagenkomponente (G), die ein öffentlich getrustetes Zertifikat (C) erhalten soll, wenigstens eine bevorzugt eindeutige Komponentenkennung (K) abzufragen und/oder für wenigstens eine Anlagenkomponente (G), die ein öffentlich getrustetes Zertifikat (C) erhalten soll, wenigstens eine bevorzugt eindeutige Komponentenkennung (K) zu generieren,
und die Registrierungsstelle (RA) dazu ausgebildet und/oder eingerichtet ist, anhand der wenigstens einen Komponentenkennung (K) zu überprüfen, ob die wenigstens eine zu der Komponentenkennung (K) gehörige Komponente (G) wenigstens einer berechtigten Person oder wenigstens einem berechtigten Unternehmen zugeordnet ist, insbesondere Eigentum wenigstens einer berechtigten Person oder wenigstens eines berechtigten Unternehmens darstellt, und für den Fall, dass dem so ist, ein öffentlich getrustetes Zertifikat (C) für die wenigstens eine Komponente (G) anzufordern,
und das Zertifizierungsmodul (ZM) dazu ausgebildet und/oder eingerichtet ist, das angeforderte öffentlich getrustete Zertifikat (C) zu empfangen und bevorzugt in einem geschützten Bereich zu speichern.

14. System nach Anspruch 13, **dadurch gekennzeichnet, dass** das System (S) eine Datenbank (D) umfasst, in der Komponentenkennungen (K) zusammen mit zugehörigen berechtigten Personen und/oder Unternehmen, die bevorzugt Eigentümer zugehöriger Komponenten (G) darstellen, gespeichert sind, und die Registrierungsstelle (RA) dazu ausgebildet und/oder eingerichtet ist, für die oder im Rahmen der Überprüfung, ob die wenigstens eine zu der Komponentenkennung (K) gehörige Komponente (G) wenigstens einer berechtigten Person oder wenigstens einem berechtigten Unternehmen zugeordnet ist, in der Datenbank (D) nach wenigstens einem Eintrag für die zusammen mit dem Zertifikatsantrag (CSR) übermittelte Komponentenkennung (K) zu suchen.

15. Engineering- (ES) oder Leitsystem für eine technisch Anlage umfassend ein Zertifizierungsmodul (ZM), das dazu ausgebildet und/oder eingerichtet ist,
- von wenigstens einer Anlagenkomponenten (G), die ein öffentlich getrustetes Zertifikat (C) erhalten soll, wenigstens eine bevorzugt eindeutige Komponentenkennung (K) abzufragen und/oder für wenigstens eine Anlagenkomponente (G), die ein öffentlich getrustetes Zertifikat (C) erhalten soll, wenigstens eine bevorzugt eindeutige Komponentenkennung (K) zu generieren,
- die wenigstens eine abgefragte und/oder wenigstens eine generierte Komponentenkennung (K) zusammen mit einem Zertifikatsantrag (CSR) für ein öffentlich getrustetes Zertifikat (C) für die wenigstens eine Komponente (G) an eine Registrierungsstelle (RA) zu übermitteln,
- ein öffentlich getrustetes Zertifikat (C) für die Anlagenkomponente zu empfangen und bevorzugt in einem geschützten Bereich zu speichern.

16. Technische Anlage, insbesondere Fertigungs- oder Prozessanlage, die wenigstens ein Engineering- (ES) oder Leitsystem nach Anspruch 15 umfasst.
